# EUROPEAN PATENT APPLICATION

(11) **EP 2 051 548 A1**
(43) Date of publication of application: **22.04.2009**
(21) Application number: 07020321.1
(22) Date of filing: 17.10.2007
(51) Int. Cl.: H04W 4/00

(54) **Signalling based trace activation from SGSN towards GGSN**

(71) Applicant: Nokia Siemens Networks Oy, 02610 Espoo (FI)
(72) Inventor: Grahn, Tom, 01620 Vantaa (FI); Pulkkinen, Heikki, 01830 Lepsämä (FI)
(74) Representative: Bruglachner, Thomas E.

(57) **Abstract**

A mobile radio telecommunication network comprises a SGSN (36') for propagating all received trace parameters to a GGSN (37'). The GGSN traces an UE (14'). The parameters of the trace are based on a network access mode of the UE (12',13').

## Description

This invention relates to signalling based trace activation from SGSN towards GGSN.

Wireless mobile communication systems provide the ability for users to communicate with other users in a wireless mode. These systems usually include a circuit-switched system and a packet-switched system.

The wire mobile communication system can be in a form of a UMTS (Universal Mobile Telecommunications System) or a GSM (Global System for Mobile Communications). The UMTS is a third generation mobile communication system, which evolved from the GSM, and is intended to provide improved mobile communication services based on a GSM core network (CN) and a Wideband Code Division Multiple Access (WCDMA) access technology. Users of the GSM may receive packet radio access, which is provided by a GPRS (General Packet Radio Service). European Telecommunication Standards Institute (ETSI) provides specification for the UMTS, the GSM, and the GPRS.

US 6 915 110 discloses a method of multi-protocol call trace on GPRS Gb and Gr interfaces of a GSM network using distributed processing.

The application provides a method of signalling-based GSM trace of an UE (user equipment) by a GGSN (Gateway GPRS Service Node) of a mobile radio telecommunication network, only the GSM trace has been activated to a HSS (Home Subscriber Server), the mobile radio telecommunication network comprises a SGSN (Serving GPRS Service Node) and the GGSN, the method comprises the step of propagating GSM trace parameters by the SGSN to the GGSN, and tracing the UE by the GGSN, if the UE accesses the mobile radio telecommunication network via a GERAN access.

The GSM trace parameters may comprise a Trace Reference information element, a Trace Type information element, a Trigger ID information element, and an OMC (Operation and Maintenance Centre) identity information element. The GGSN can deactivate the GSM trace of the UE, if the UE changes the network access mode from the GERAN (GSM/EDGE Radio Access Network) access to a UMTS (Universal Mobile Telecommunications System) access and the GGSN may activate the GSM trace of the UE, if the UE changes the network access mode from the UMTS access to the GERAN access.

A method of signalling-based UMTS trace of an UE by a GGSN of a mobile radio telecommunication network, only the UMTS trace has been activated to a HSS, the mobile radio telecommunication network comprises a SGSN and the GGSN, the method comprises the step of propagating UMTS trace parameters by the SGSN to the GGSN, and tracing the UE by the GGSN, if the UE accesses the mobile radio telecommunication network via a UMTS access.

The UMTS trace parameters may comprise an Additional Trace Info information element and the GGSN may deactivate the UMTS trace of the UE, if the UE changes the network access mode from the UMTS access to a GERAN access. The GGSN can activate the UMTS trace of the UE, if the UE changes the network access mode from the GERAN access to the UMTS access.

The UMTS trace may be deactivated to the HSS, wherein the SGSN deactivates the UMTS trace of the UE at the GGSN via sending an Update PDP (Packet Data Protocol) Context Request message to the GGSN and the GGSN removes the UMTS trace parameters shown by the Update PDP Context Request message and deactivates the trace, if the UE accesses via the UMTS access. The Update PDP Context Request message comprises an Additional Trace Info information element and a Trace Activity Control Info information element. The Trace Activity Control Info information element comprises a Trace Deactivation.

The UMTS trace may also be deactivated to the HSS, wherein the SGSN deactivates the UMTS trace of the UE at the GGSN via sending an MBMS Context Request message to the GGSN and the GGSN removes the UMTS trace parameters shown by the MBMS Context Request message and deactivates the trace, if the UE accesses via the UMTS access. The MBMS Context Request message comprises an Additional Trace Info information element and a Trace Activity Control Info information element. The Trace Activity Control Info information element comprises a Trace Deactivation.

A method of signalling-based GSM and UMTS trace of an UE by a GGSN of a mobile radio telecommunication network, both the GSM and the UMTS trace has been activated to a HSS, the mobile radio telecommunication network comprises a SGSN and the GGSN. The method comprises the step of propagating an GSM trace parameters and an UMTS trace parameters by the SGSN to the GGSN, and tracing the UE by the GGSN based on the UMTS trace parameters, if the UE accessed the mobile radio telecommunication network via a UMTS access, and tracing the UE by the GGSN based on the GSM trace parameters, if the UE accessed the mobile radio telecommunication network via a GERAN access.

The GSM trace parameters may comprise a Trace Reference identity information element, a Trace Type identity information element, a Trigger ID identity information element, and an OMC identity information element. The UMTS trace parameters can comprise an Additional Trace Info information element.

The GGSN may deactivate the UMTS trace of the UE based on the UMTS trace parameters, and the GGSN activates the GSM trace of the UE based on the GSM trace parameters, if the UE changes access mode from the UMTS access to the GERAN access. The GGSN can deactivate the GSM trace of the UE based on the GSM trace parameters, and the GGSN activates the UMTS trace of the UE based on the UMTS trace parameter, if the UE changes access mode from the GERAN access to the UMTS access.

The UMTS trace may be deactivated to the HSS, wherein the SGSN deactivates the UMTS trace of the UE at the GGSN via sending an Update PDP Context Request message to the GGSN and the GGSN removes the UMTS trace parameters shown by the Update PDP Context Request message and explicitly deactivates the trace, if the UE accesses via the UMTS access. The Update PDP Context Request message comprises an Additional Trace Info information element and a Trace Activity Control Info information element, the Trace Activity Control Info information element comprises a Trace Deactivation.

The UMTS trace may also be deactivated to the HSS, wherein the SGSN deactivates the UMTS trace of the UE at the GGSN via sending an MBMS Context Request message to the GGSN, and the GGSN removes the UMTS trace parameters shown by the MBMS Context Request message and explicitly deactivates the trace, if the UE accesses via the UMTS access. The MBMS Context Request message comprises an Additional Trace Info information element and a Trace Activity Control Info information element, the Trace Activity Control Info information element comprises a Trace Deactivation.

A mobile radio telecommunication network, which comprises a SGSN for propagating all received trace parameters to a GGSN, and the GGSN for tracing an UE, the trace parameters are based on a network access mode of the UE.

The received trace parameters can comprise a GSM trace parameters, a UMTS trace parameters, or a GSM and UMTS trace parameters. The network access mode may comprise a GERAN access or a UMTS access. The GGSN may change the trace parameters of the trace corresponding with a change in the network access mode. The GGSN can receive from the SGSN a radio access type of information element.

The method provides backward compatibility with the GGSN implementing release 5 (Rel-5) based trace parameters in both the GERAN and the UMTS accesses. The SGSN functionality towards the GGSN is transparent for the access type or mode. The method is simple and straightforward with coherent logic.
- FIG. 1: illustrates a simplified block diagram of a radio system,
- FIG. 2: illustrates a high-level view of an architecture of signalling based trace activation or deactivation of the radio system of FIG. 1, and
- FIG. 3: illustrates a signalling-based trace activation from a Serving GPRS Support Node (SGSN) to a Gate-way GPRS Support Node (GGSN) of FIG. 1.

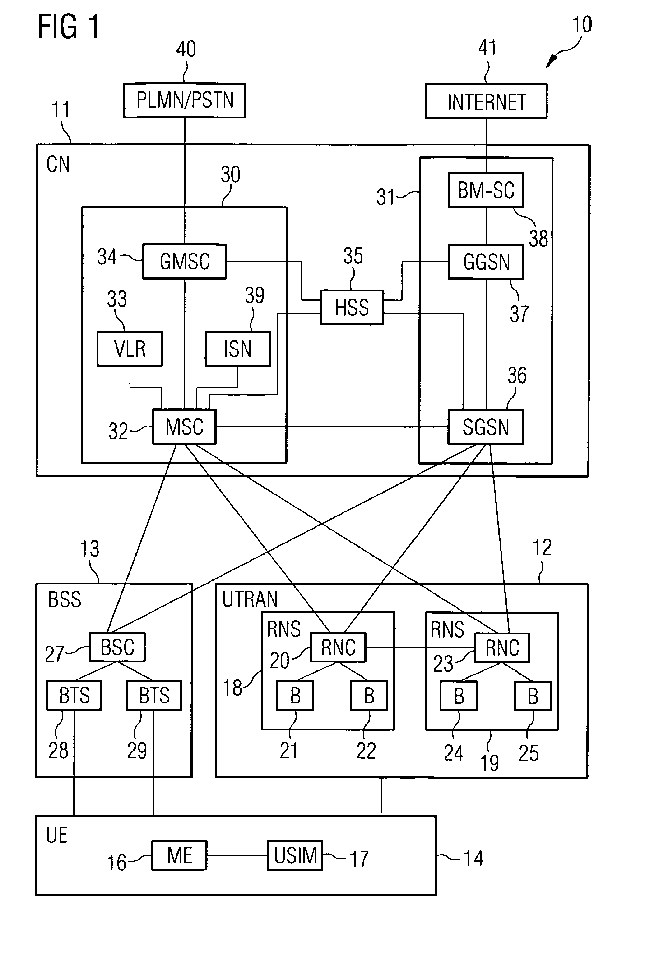

FIG. 1 illustrates a simplified block diagram of a radio system 10. A specification of the radio system 10 is shown in European Telecommunications Standards Institute (ETSI) technical specification, http://www.3gpp.org.

The radio system 10 comprises a core network (CN) 11, a plurality of UMTS Terrestrial Radio Access Network (UTRAN) 12, a plurality of base station system (BSS) 13, and a plurality of user equipment (UE) 14. The CN 11 is connected to the BSS 13 and to the UTRAN 12 by interfaces that support user traffic and by signalling links. The interface may include fibre cable. The UE 14 is connected to the BSS 13 and to the UTRAN 12 by radio interface that support user traffic and signalling.

The UE 14, the UTRAN 12, the BSS 12 and the CN 11 comprise network elements or entities, which are described below.

The UE 14 comprises a mobile equipment (ME) 16 and a universal subscriber identity module (USIM) 17, which is connected to the ME 16.

The UTRAN 12 includes radio network sub-systems (RNSs) 18 and 19. The RNS 18 includes a Radio Network Controller (RNC) 20 and node Bs 21 and 22. The node Bs 21 and 22 are joined to the RNC 20. Similarly, the RNS 19 includes a RNC 23 and node Bs 24 and 25. The node Bs 24 and 25 are joined to the RNC 23.

The RNS 20 is also connected to the RNS 23. The BSS 13 comprises a base station subsystem (BSC) 27 and base transceiver stations (BTSs) 28 and 29. The BSC 27 is connected to the BTSs 28 and 29.

The CN 11 includes a circuit-switched block 30, a packet-switched block 31, and a Home Subscriber Server (HSS) 35. The HSS 35 and to the circuit-switched block 30 and to the packet-switched block 31 whilst the packet-switched block 31 is also connected the circuit-switched block 30.

The circuit-switched block 30 comprises a Mobile Service Switching Centre (MSC) 32, a visitor location register (VLR) 33, and a Gateway MSC (GMSC) 34. The MSC 32 is connected to the VLR 33 and to the GMSC 34.

The packet-switched block 31 includes a Serving GPRS Support Node (SGSN) 36, a Gateway GPRS Support Node (GGSN) 37, and a broadcast multicast service centre (BM-SC) 38. The SGSN 36 is connected to the GGSN 37.

The GGSN 37 is connected to the BM-SC 38, as illustrated in FIG. 1. In another embodiment, the GGSN 37 is connected over an Gi interface to the Internet 41.

The HSS 35 is connected to the MSC 32, to the GMSC 34, to the GGSN 37, and to the SGSN 36. The GMSC 34 is connected to an external network 40 whilst the BM-SC 38 is connected to the Internet 41. The MSC 32 is connected to the RNCs 20 and 23, and BSC 27 whilst the SGSN 36 is connected to the RNCs 20 and 23, and BSC 27.

In a generic sense, the GGSN 37 is a part of an Intelligent Service Node (ISN).

The radio system 10, as provided here, comprises network elements of different generation radio systems. Parts of the older generation radio system are replaced with parts of newer generation radio system to form the radio system 10, as shown in FIG. 1. The radio system 10 includes network elements of a second-generation (2G) radio system, which is known as a Global System for Mobile Communications (GSM), 2.5G radio system, which is known as GSM-based GPRS, and of third-generation (3G) radio system, which known as a Universal Mobile Telecommunications System (UMTS).

The signalling links between the CN 11 and the BSS 13 or the UTRAN 12 provides and between the UE 14 and the BSS 13 or the UTRAN 12 provides an exchange of information relating with establishment and control of communication connections, such as trace control, trace parameter configuration or trace parameter. The user traffic between the CN 11 and the BSS 13 or the UTRAN 12 provides and between the UE 14 and the BSS 13 or the UTRAN 12 relates to user information, such as user speech.

The BSS 13 and the circuit-switched block 30 are part of the 2G radio system. The BSS 113 and the packet-switched block 313 are part of the 2.5 radio system. The UTRAN 12 and the packet-switched block 31 are part of the 3G radio system.

The UTRAN 12 provides radio links between the UEs 14 and the CN 11 for the UEs 14 that are within its geographical area. Similarly, the BSS 13 arranges radio links between the UEs 14 and the CN 11 for the UEs 14 that are within its geographical area. A mobile UE 14 may travel from a geographical area that is served by the UTRAN 12 or the BSS 13 to a geographical area that is served by another UTRAN 12, or by another BSS 13. In this case, a handover occurs in which a radio link of the UE 14 is transferred from the UTRAN 12 or from the BSS 13 to another UTRAN 12 or to another BSS 13. This is also known as inter-system handover (ISHO). The ISHO occurs if the radio access type changes, for example from an access via an UMTS to an access via a GERAN, or from an access by a GERAN to an access via a UMTS. The UE 14 may be also establishes a radio link to the UTRAN 12, to the BSS 13 or to both the UTRAN 12 and the BSS 13.

The USIM 17, as provided here, is for storing information related to a subscriber of the radio system 10, such as telephone number. In another embodiment, a subscriber identity module (SIM) replaces the USIM 17.

The BSS 13 and the UTRAN 12, as provided here, provides a means of radio access between the CN 11 and the UE 14. The BSS 12 uses time division multiple access technology (TDMA) whilst the UTRAN 12 utilizes wideband code division multiple access technology (WCDMA).

The BSC 27 manages resources of the BTS 28 and 29 to perform handover between cells, to allocate frequencies, to manage frequency-hopping sequences, to measure uplink time-delays, to implement operation and maintenance interface, and to manage power control. The BSC 27 and the BTS 28 and 29 are part of a GSM/EDGE Radio Access Network (GERAN).

The RNC 20 and 23 provides functions that are similar to the functions of the BSC 27 whilst the functions of the node B 21, 22, 24 and 25 are similar to the functions of the base transceiver station 28 and 29.

The CN 11, as provided here, offers mobility management for telecommunication services in the radio system 10.

The MSC 32 serves the UTRAN 12 and the BSS 13 in providing switching connection, paging, registering subscriber terminal location, managing handover, collecting of subscriber billing information, managing encryption parameter, managing frequency allocation, and cancelling echo. The VLR 33 comprises information regarding a roaming UE 14 located in an area of the BSS 13, or of the UTRAN 12. The VLR 33 includes information type that is mainly the same as the information type in the HSS 35, with the exception that the said information is stored temporarily in the VLR 33. The MSC 32 and the VLR 33 may constitute one physical device. The GMSC 34 serves as incoming transit exchange for incoming calls from the external network 40. The external network 40 may be in a form of a public land mobile network (PLMN) or a public switched telephone network (PSTN).

The HSS 35 comprises a home location register (HLR), which includes a permanent subscriber register. The permanent subscriber register stores of information about a mobile phone subscriber such as, an international mobile subscriber identity (IMSI), an Integrated Services Digital Network (ISDN), a mobile subscriber ISDN number (MSISDN), an authentication key, and a packet data protocol (PDP) address when the radio system 10 is supporting the GPRS.

The SGSN 36 transmits and receives packets with the UE 14 and thereby supporting packet-switched transfer by using the UTRAN 12 or the BSS 13. The SGSN 36 retains subscriber data and location data of the UE 14. The GGSN 37 supports packet-switch transmission in a manner similar to the GMSC 34 supporting circuit switched transmission with the exception that the GGSN 37 also routes traffic outgoing from the CN 11 to external networks, whereas the GMSC 34 only routes incoming traffic. In this example, the Internet represents the external networks. The BM-SC 38 manages a service in which a user requests or activates his participation in a home or a roaming situation for sending multimedia data to several users.

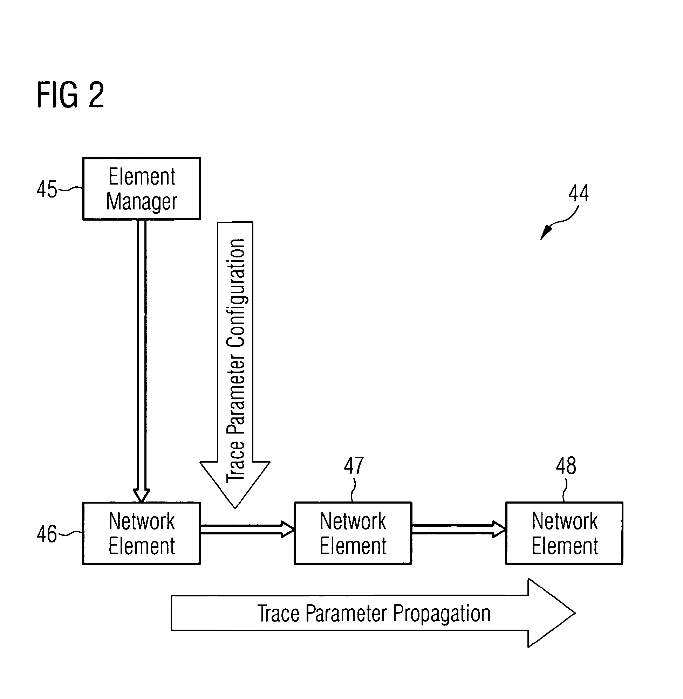

FIG. 2 illustrates a high-level view of an architecture of signalling-based trace activation or deactivation 44 of the radio system of FIG. 1. FIG. 2 shows an element manager 45 and a plurality of network elements 46, 47 and 48.

The element manager 45 transmits trace parameter configuration to the network element 46, which may stores the trace parameter and which propagates trace parameter to the network element 47. The network element 47 may propagates the trace parameter to the network element 48. This is different from a management-based trace or local trace activation wherein a network element receives trace parameter configuration from a element manager and does not sends the trace parameter to another network element.

The element manager 45, as provided here, may activate the signalling based trace activation for a packet switched domain, or for a circuit switched domain.

The trace provides an understanding of how a communication connection, such as a phone call, is made to another within a network. A trace can be made for a subscriber of a network, or for a UE of the subscriber.

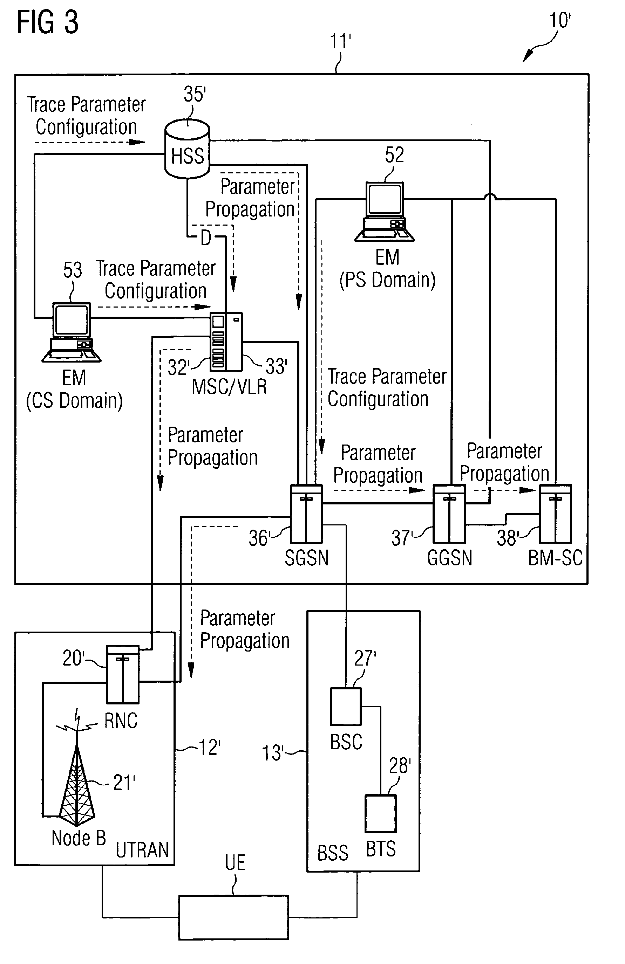

FIG. 3 illustrates a signalling-based trace activation of an UE from a Serving GPRS Support Node (SGSN) to a Gateway GPRS Support Node (GGSN). The signalling-based trace can be made for an International Mobile Equipment Identity (IMEI) of the UE of a home subscriber.

The FIG. 3 comprises parts that are similar to parts of the FIG. 1. The similar parts are denoted with the same number and a prime. The description of the similar parts of the FIG. 1 is thereby incorporated here by way of reference.

The FIG. 3 shows a radio network 10' that comprises a core network (CN) 11', a UMTS Terrestrial Radio Access Network (UTRAN) 12', a base station system (BSS) 13' and a plurality of UE 14'. The CN 11' is connected to the UTRAN 12' and to the BSS 13' by signalling links. The UE 14' is connected to the UTRAN 12' and to the BSS 13' by radio channels.

The UTRAN 12' includes a Radio Network Controller (RNC) 20' and a node B 21' that is connected to the RNC 20' via a signalling link.

The BSS 13' comprises a base station subsystem (BSC) 27' and a base transceiver station (BTS) 28' that is connected to the BSC 27' via a signalling link.

The CN 11' comprises a Home Subscriber Server (HSS) 35', a (MSC) 32' with a visitor location register (VLR) 33', a Serving GPRS Support Node (SGSN) 36', a Gateway GPRS Support Node (GGSN) 37', a broadcast multicast service centre (BM-SC) 38', and an element management system (EMS). The EMS includes element managers (EM) 52 and 53.

The RNC 20' is connected to the MSC 32' and to the SGSN 36' via signalling links whilst the BSC 27' is connected to the MSC 32' and to the SGSN 36' via signalling links.

The MSC 32', or the VLR 33', is connected to the SGSN 36', by signalling link whilst the SGSN 36' is connected to the GGSN 37' via a signalling link. The GGSN 37' is connected to the BM-SC 38' via a signalling link. The HSS 35' is connected to the SGSN 36', to the MSC 32', or the VLR 33', and to the GGSN 37' by signalling links.

The EM 52 is connected to the SGSN 36', to the GGSN 37' and to the BM-SC 38' via management links whilst the EM 53 is connected to the HSS 35' and to the MSC 32' by management links. The management link, as provided here, is a channel for the transmission of trace parameter configuration.

A GERAN access or 2G access occurs if the UE 14' accesses the network 10' via the BSS 13' whilst an UMTS access or 3G access occurs if the UE 14' accesses the network 10' via the UTRAN 12'.

A trace of the UE 14' with the GERAN access, with UMTS access, or with the GERAN and the UMTS access, at the GGSN 37', can be requested.

The GGSN 37' is informed of a Trace via a "Create PDP context Request" or via an "Update PDP Context Request" (and corresponding MBMS related GPRS Tunnelling Protocol (GTP) messages: "Create MBMS Context Request" and "Update MBMS Context Request"). The said messages comprise the trace information: a Trace Reference, a Trace Type, a Trigger ID, and an OMC identity information element. An UMTS trace parameter comprises an Additional Trace Info information element. The information elements are described in "GPRS Tunnelling Protocol (GTP) across the Gn and Gp interface", TS 29.060, http://www.3gpp.org/ftp/Specs/html-info/29060.htm.

A method of signalling-based trace of the UE 14', wherein the SGSN 36' activates the trace at the GGSN 37', is described below.

The EMS transmits a message with a trace control and configuration parameters to the HSS 35'. The message requests a trace for the UE 14' at the GGSN 37'. The trace can be for an IMEI of the UE 14'. The HSS 35' then stores the trace control and configuration parameters.

The UE 14' later sends a message to the SGSN 36' requesting attachment to or connection to the radio network 10'. The SGSN 36' afterwards sends a message to the HSS 35' updating location information of the UE 14' in the HSS 35'.

The HSS 35' checks as to whether the UE 14' is being traced. If the UE 14' is being traced, the HSS 35' propagates a message with the trace control and configuration parameters to the SGSN 36'. The SGSN 36' then stores the trace control and configuration parameters of the message.

The SGSN 36' afterward propagates all received trace control and configuration parameter to the GGSN 37'. The GGSN 37' activate the relevant trace type or mode, as directed by the trace control and configuration parameter. The trace type can be for the GERAN access, the UMTS access or both the GERAN and UMTS access. The GGSN 37' receives a radio access type of the UE 14' from a radio access type (RAT) information element.

The trace may be activated to the HSS 35' for only GSM trace, for only UMTS trace, or for GSM and UMTS trace.

If only GSM trace has been activated to the HSS 35', the method comprises a first further method of signalling-based trace of the UE 14', wherein the UE 14' accessed the network 10' by the GERAN access and the trace activation is performed by the GGSN 37'.

The first further method comprises the step of sending the GSM trace parameters by the SGSN 36' to the GGSN 37'. The GGSN 37' performs the trace of the UE 14' at the GGSN 37', if the UE 14' accesses the network 10' via the BSS 13'. If the UE 14' afterward changes access mode from the GERAN access to the UMTS access, no new trace parameters is sent to the GGSN 37' and the GGSN 37' stops the trace of GERAN access.

Similarly, the GGSN 37' do not activate the GSM trace if the UE 14' accesses the network 10' via the UTRAN 12'. If the UE 14' later changes from the UTMS access to the GERMAN access, the GGSN 37' activates the trace of the GERAN access without new trace parameters being sent to the GGSN 37'.

If only UMTS trace has been activated to the HSS 35', the method comprises a second further method of signalling-based trace of the UE 14', wherein the UE 14' accessed the network by the UMTS access and the trace activation is executed by the GGSN 37'.

The second further method includes the step of sending the UMTS trace parameter by the SGSN 36' to the GGSN 37'. The GGSN 37' do not perform the trace of the UE 14' if the UE 14' accesses the network 10' via the BSS 13'. If the UE 14' later changes access mode from the GERAN access to the UMTS access, the GGSN 37' activates the trace of the UMTS access, and no new trace parameters are sent to the GGSN 37'.

In contrast, the GGSN 37' activates the trace of UMTS access if the UE 14' accesses the network 10' via the UTRAN 12'. If the UE 14' later changes from the UMTS access to the GERAN access, the GGSN 37' deactivates the trace of the UMTS access. No additional trace parameters are sent to the GGSN 37'.

The SGSN 36' may deactivate the trace of the UMTS access at the GGSN 37' via sending an Update PDP or MBMS Context Request message to the GGSN 37'. The Update PDP or MBMS Context Request message includes the Additional Trace Info information element and a Trace Activity Control Info information element that is set to Trace Deactivation. The GGSN 37' then removes the UMTS trace parameters and the GGSN 37' stops the trace of the UMTS access. If the UE 14' afterward changes from the GERAN access to the UMTS access, the GGSN 37' does not activate the trace of the UMTS access.

If the GSM and UTMS trace has been activated to the HSS 35', the method comprises a third further method of signalling-based trace of the UE 14', wherein the UE 14' accessed the network by the UMTS access or by the GERAN access whilst the trace activation is performed by the GGSN 37'.

The third further method includes the step of transmitting the UMTS trace parameter and the GSM trace parameters by the SGSN 36' to the GGSN 37'. The GGSN 37' performs the trace of the GERAN access if the UE 14' accesses the network 10' via the GERAN access. If the UE 14' later changes mode of access from the GERAN access to the UMTS access, the GGSN 37' deactivates the trace of the GERAN access and activates the trace of the UMTS access. No new trace parameters are sent to the GGSN 37'.

In like manner, the GGSN 37' activates the trace of the UMTS access if the UE 14' accesses the network 10' via the UMTS access. If the UE 14' afterward changes from the UMTS access to the GERAN access, the GGSN 37' deactivates the trace of the UMTS access and starts the trace of the GERAN access. No additional trace parameters are sent to the GGSN 37'.

The SGSN 36' can deactivate the trace of the UMTS access at the GGSN 37' via transmitting an Update PDP or MBMS Context Request message to the GGSN 37'. The Update PDP or MBMS Context Request message comprises the Additional Trace Info information element and a Trace Activity Control Info information element, which is set to Trace Deactivation. The GGSN 37' then removes the UMTS trace parameters for the subscriber and the GGSN 37' deactivates the trace of the UMTS access. The deactivation is explicit in that the GGSN 37' directly deactivates the trace of the UMTS access. If the UE 14' later changes from the GERAN access to the UMTS access, the GGSN 37' does not start the trace of the UMTS access. The trace of the GERAN access is stopped only via deactivated of the PDP context.

In summary, it is the responsibility of the SGSN to propagate the all received trace parameters towards the GGSN, irrespective of the access type or mode. The received trace parameters can be for the GERAN access, the UMTS access or both the GERAN and the UMTS accesses. It is the responsibility of the GGSN (if Rel-6 trace is supported) to make GGSN trace to UMTS or GSM trace activation parameters (including relevant trace reference) based on the access type, and to change it if an ISHO occurs. The GGSN receives the radio access for the UE from the SGSN in the "RAT type" of information element. Possible UMTS trace deactivation to the GGSN is sent in the Update PDP Context Request or in the Update MBMS Context Request messages by the SGSN. After this, it is responsibility of the GGSN to remove stored UMTS trace parameters related to this PDP context (and to deactivate trace if the current RAT is UMTS.)

### List of abbreviations

- 2G: second-generation
- 3G: third-generation
- 3GPP: 3rd Generation Partnership Project
- BSC: Base Station Controller
- BSS: base station system
- CN: core network
- EDGE: Enhanced Data rates for GSM Evolution
- EMS: element management system
- ETSI: European Telecommunication Standards Institute
- GERAN: GSM/EDGE Radio Access Network
- GGSN: Gateway GPRS Service Node
- GMSC: Gateway Mobile Service Switching Centre
- GPRS: General Packet Radio Service
- GSM: Global System for Mobile Communications
- GTP: GPRS Tunnelling Protocol
- HLR: Home Location Register
- IE: Information Element
- IMEI: International Mobile Equipment Identity
- IMSI: International Mobile Subscriber Identity
- ISHO: Inter-System Handover
- ISN: Intelligent Service Node
- MBA: management based activation
- MBMS: Multimedia Broadcast Multicast Service
- MSC: Mobile Service Switching Centre
- ME: mobile equipment
- NE: network element
- OMC: Operation and Maintenance Centre
- PDP: Packet Data Protocol
- RAT: Radio Access Type
- RAU: Routeing Area Update
- RNC: Radio Network Controller
- SBA: Signalling Based Activation
- SCF: service control function
- SDF: service data function
- SGSN: Serving GPRS Service Node
- SIM: subscriber identity module.
- SSF: service switching function
- TDMA: time division multiple access
- UE: user equipment
- UMTS: Universal Mobile Telecommunications System
- USIM: universal subscriber identity module.
- UTRAN: UMTS Terrestrial Radio Access Network
- WCDMA: Wideband Code Division Multiple Access

### Reference numbers

- 10, 10': radio system 10
- 11, 11': core network (CN)
- 12, 12': UMTS Terrestrial Radio Access Network (UTRAN)
- 13, 13': a base station system (BSS)
- 14, 14': user equipment (UE)
- 16: mobile equipment (ME)
- 17: universal subscriber identity module (USIM)
- 18: radio network sub-systems (RNS)
- 19: radio network sub-systems (RNS)
- 20, 20': Radio Network Controller (RNC)
- 21, 21', 22: node B
- 23: radio network controller (RNC)
- 24, 25: node B
- 27, 27': base station subsystem (BSC)
- 28, 28', 29: base transceiver station (BTS)
- 30: circuit-switched block
- 31: packet-switched block
- 32: Mobile Service Switching Centre (MSC)
- 33, 33': visitor location register (VLR)
- 34: Gateway MSC (GMSC)
- 35, 35': Home Subscriber Server (HSS)
- 36, 36': serving GPRS support node (SGSN)
- 37, 37': gateway GPRS support node (GGSN)
- 38, 38': broadcast multicast service centre (BM-SC)
- 39: Intelligent Service node (ISN)
- 40: external network
- 41: the Internet
- 44: architecture of signalling based trace activation or deactivation
- 45: element manager
- 46, 47, 48: network element
- 52, 53: element manager (EM)

## Claims

1. A method of signalling-based GSM trace of an UE (14; 14') by a GGSN (37; 37') of a mobile radio telecommunication network (10; 10'), only the GSM trace has been activated to a HSS (35, 35'), the mobile radio telecommunication network (10; 10') comprises a SGSN (36; 36') and the GGSN (37; 37'), the method comprises the step of:
propagating GSM trace parameters by the SGSN (36; 36') to the GGSN (37; 37'), and
tracing the UE (14; 14') by the GGSN (37; 37'), if the UE (14; 14') accesses the mobile radio telecommunication network (37; 37') via a GERAN access.

2. The method according to claim 1,
**characterized in that**
the GSM trace parameters comprises a Trace Reference information element, a Trace Type information element, a Trigger ID information element, and an OMC identity information element.

3. The method according to claim 1 or 2,
**characterized in that**
the GGSN (37; 37') deactivates the GSM trace of the UE (14; 14'), if the UE (14; 14') changes the network access mode from the GERAN access to a UMTS access.

4. The method according to one of the preceding claims,
**characterized in that**
the GGSN (37; 37') activates the GSM trace of the UE (14; 14'), if the UE (14; 14') changes the network access mode from the UMTS access to the GERAN access.

5. A method of signalling-based UMTS trace of an UE (14; 14') by a GGSN (37; 37') of a mobile radio telecommunication network (10; 10'), only the UMTS trace has been activated to a HSS (35; 35'), the mobile radio telecommunication network (10; 10') comprises a SGSN (36; 36') and the GGSN (37; 37'), the method comprises the step of:
propagating UMTS trace parameters by the SGSN (36; 36') to the GGSN (37; 37'), and
tracing the UE (14; 14') by the GGSN (37; 37'), if the UE (14; 14') accesses the mobile radio telecommunication network (10; 10') via a UMTS access.

6. The method according to claim 5,
**characterized in that**
the UMTS trace parameters comprises an Additional Trace Info information element.

7. The method according to claim 5 or 6,
**characterized in that**
the GGSN (37; 37') deactivates the UMTS trace of the UE (14; 14'), if the UE (14; 14') changes the network access mode from the UMTS access to a GERAN access.

8. The method according to one of the claims 5 to 7,
**characterized in that**
the GGSN (37; 37') activates the UMTS trace of the UE (14; 14'), if the UE (14; 14') changes the network access mode from the GERAN access to the UMTS access.

9. The method according to one of the claims 5 to 8,
**characterized in that**
if the UMTS trace is deactivated to the HSS (35; 35'), the SGSN (36; 36') deactivates the UMTS trace of the UE (14; 14') at the GGSN (37; 37') via sending an Update PDP Context Request message to the GGSN (37; 37'), the Update PDP Context Request message comprises an Additional Trace Info information element and a Trace Activity Control Info information element, the Trace Activity Control Info information element comprises a Trace Deactivation, and
the GGSN (37; 37') removes the UMTS trace parameters shown by the Update PDP Context Request message and deactivates the trace of the UE (14; 14') that accesses via the UMTS access.

10. The method according to one of the claims 5 to 8,
**characterized in that**
if the UMTS trace is deactivated to the HSS (35; 35'), the SGSN (36; 36') deactivates the UMTS trace of the UE (14; 14') at the GGSN (37; 37') via sending an MBMS Context Request message to the GGSN (37; 37'), the MBMS Context Request message comprises an Additional Trace Info information element and a Trace Activity Control Info information element, the Trace Activity Control Info information element comprises a Trace Deactivation, and
the GGSN (37; 37') removes the UMTS trace parameters shown by the MBMS Context Request message and deactivates the trace of the UE (14; 14') that accesses via the UMTS access.

11. A method of signalling-based GSM and UMTS trace of an UE (14; 14') by a GGSN (37; 37') of a mobile radio telecommunication network (10; 10'), both the GSM and the UMTS trace has been activated to a HSS (35; 35'), the mobile radio telecommunication network (10; 10') comprises a SGSN (36; 36') and the GGSN (37; 37'), the method comprises the step of:
propagating an GSM trace parameters and an UMTS trace parameters by the SGSN (36; 36') to the GGSN (37; 37'), and
tracing the UE (14; 14') by the GGSN (37; 37') based on the UMTS trace parameters, if the UE (14; 14') accessed the mobile radio telecommunication network (10; 10') via a UMTS access, and
tracing the UE (14; 14') by the GGSN (37; 37') based on the GSM trace parameters, if the UE (14; 14') accessed the mobile radio telecommunication network (10; 10') via a GERAN access.

12. The method according to claim 11,
**characterized in that**
the GSM trace parameters comprises a Trace Reference identity information element, a Trace Type identity information element, a Trigger ID identity information element, and an OMC identity information element.

13. The method according to claim 11 or 12,
**characterized in that**
the UMTS trace parameters comprises an Additional Trace Info information element.

14. The method according to one of the claims 11 to 13,
**characterized in that**
the GGSN (37; 37') deactivates the UMTS trace of the UE (14; 14') based on the UMTS trace parameters, and the GGSN (37; 37') activates the GSM trace of the UE (14; 14') based on the GSM trace parameters, if the UE (14; 14') changes access mode from the UMTS access to the GERAN access.

15. The method according to one of the claims 11 to 13,
**characterized in that**
the GGSN (37; 37') deactivates the GSM trace of the UE (14; 14') based on the GSM trace parameters, and the GGSN (37; 37') activates the UMTS trace of the UE (14; 14') based on the UMTS trace parameter, if the UE (14; 14') changes access mode from the GERAN access to the UMTS access.

16. The method according to one of the claims 11 to 15,
**characterized in that**
if the UMTS trace is deactivated to the HSS (35; 35'), the SGSN (36; 36') deactivates the UMTS trace of the UE (14; 14') at the GGSN (37; 37') via sending an Update PDP Context Request message to the GGSN (37; 37'), the Update PDP Context Request message comprises an Additional Trace Info information element and a Trace Activity Control Info information element, the Trace Activity Control Info information element comprises a Trace Deactivation, and
the GGSN (37; 37') removes the UMTS trace parameters shown by the Update PDP Context Request message and explicitly deactivates the trace if the UE (14; 14') accesses via the UMTS access.

17. The method according to one of the claims 11 to 15,
**characterized in that**
if the UMTS trace is deactivated to the HSS (35; 35'), the SGSN (36; 36') deactivates the UMTS trace of the UE (14; 14') at the GGSN (37; 37') via sending an MBMS Context Request message to the GGSN (37; 37'), the MBMS Context Request message comprises an Additional Trace Info information element and a Trace Activity Control Info information element, the Trace Activity Control Info information element comprises a Trace Deactivation, and
the GGSN (37; 37') removes the UMTS trace parameters shown by the MBMS Context Request message and explicitly deactivates the trace if the UE (14; 14') accesses via the UMTS access.

18. A mobile radio telecommunication network (10; 10'), which comprises
a SGSN (36; 36') for propagating all received trace parameters to a GGSN (37; 37'), and
the GGSN (37; 37') for tracing an UE (14; 14'), the trace parameters are based on a network access mode of the UE (14; 14').

19. The mobile radio telecommunication network (10; 10') according to claim 18
**characterized in that**
the received trace parameters comprises a GSM trace parameters, a UMTS trace parameters, or a GSM and UMTS trace parameters.

20. The mobile radio telecommunication network (10; 10') according to claim 18 or 19
**characterized in that**
the network access mode comprises a GERAN access or a UMTS access.

21. The mobile radio telecommunication network (10; 10') according to one of the claims 18 to 20
**characterized in that**
the GGSN (37; 37') changes the trace parameters of the trace corresponding with a change in the network access mode.

22. The mobile radio telecommunication network (10; 10') according to one of the claims 18 to 21
**characterized in that**
the GGSN (37; 37') receives from the SGSN (36; 36') a radio access type of information element.
